# EUROPÄISCHE PATENTSCHRIFT

(11) **EP 2 976 521 B1**
(45) Veröffentlichungstag und Bekanntmachung des Hinweises auf die Patenterteilung: **25.01.2017**
(21) Anmeldenummer: 14705977.8
(22) Anmeldetag: 15.02.2014
(51) Int. Cl.: F02P 15/08, F02P 17/12

(54) **VERFAHREN ZUM BETREIBEN EINER VERBRENNUNGSKRAFTMASCHINE SOWIE VERBRENNUNGSKRAFTMASCHINE**
METHOD FOR OPERATING AN INTERNAL COMBUSTION ENGINE AND INTERNAL COMBUSTION ENGINE
PROCÉDÉ POUR FAIRE FONCTIONNER UN MOTEUR À COMBUSTION INTERNE AINSI QUE MOTEUR À COMBUSTION INTERNE

(30) Priorität: 19.03.2013 DE 102013004728
(43) Veröffentlichungstag der Anmeldung: 27.01.2016
(73) Patentinhaber: Daimler AG, 70327 Stuttgart (DE)
(72) Erfinder: BERTSCH, Dietmar, 71546 Aspach (DE); OTT, Harald, 74343 Sachsenheim (DE); SCHAUPP, Uwe, 73249 Wernau (DE)
(74) Vertreter: JENSEN & SON
(86) Internationale Anmeldenummer: PCT/EP2014/000426
(87) Internationale Veröffentlichungsnummer: WO 2014/146744

(56) Entgegenhaltungen:
- EP-A2- 0 790 406
- DE-A1- 10 034 725
- DE-A1-102007 034 390
- DE-A1-102011 012 093

## Beschreibung

Die Erfindung betrifft ein Verfahren zum Betreiben einer Verbrennungskraftmaschine gemäß dem Oberbegriff von Patentanspruch 1 sowie eine Verbrennungskraftmaschine gemäß dem Oberbegriff von Patentanspruch 10.

Ein solches Verfahren sowie eine solche Verbrennungskraftmaschine sind der
DE 10 2011 012 093 A1 als bekannt zu entnehmen. Bei dem Verfahren werden mittels einer Zündeinrichtung, insbesondere eines Zündtransformators, der Verbrennungskraftmaschine mehrere Funken in wenigstens einem Brennraum der Verbrennungskraftmaschine erzeugt. Die mehreren Funken dienen dabei dazu, ein Kraftstoff-Luft-Gemisch in dem wenigstens einen Brennraum zu zünden, so dass das Kraftstoff-Luft-Gemisch in der Folge verbrennt.

Ferner wird bei dem Verfahren wenigstens eine Brenndauer zumindest eines der Funken ermittelt. Darüber hinaus wird eine Abweichung eines Ist-Betriebs von einem Soll-Betrieb der Verbrennungskraftmaschine zumindest in Abhängigkeit von der wenigstens einen Brenndauer des Funkens erfasst. Die Abweichung wird durch Durchführen wenigstens einer Maßnahme kompensiert, wobei die Maßnahme die Verbrennung des Kraftstoff-Luft-Gemisches in dem wenigstens einen Brennraum beeinflusst. Zum Durchführen des Verfahrens umfasst die Verbrennungskraftmaschine beispielsweise eine Recheneinrichtung, welche üblicherweise ein Steuergerät oder Motorsteuergerät der Verbrennungskraftmaschine ist. Die Recheneinrichtung ist dabei zum Durchführen des Verfahrens ausgelegt.

Es ist Aufgabe der vorliegenden Erfindung, ein Verfahren zum Betreiben einer Verbrennungskraftmaschine sowie eine Verbrennungskraftmaschine der eingangs genannten Art derart weiterzuentwickeln, dass sich ein besonders effektiver und effizienter Betrieb der Verbrennungskraftmaschine realisieren lässt.

Diese Aufgabe wird durch ein Verfahren mit den Merkmalen des Patentanspruchs 1 sowie durch eine Verbrennungskraftmaschine mit den Merkmalen des Patentanspruchs 10 gelöst. Vorteilhafte Ausgestaltungen mit zweckmäßigen und nicht-trivialen Weiterbildungen der Erfindung sind in den übrigen Ansprüchen angegeben.

Um ein Verfahren der im Oberbegriff des Patentanspruchs 1 angegebenen Art zu schaffen, mittels welchem die Verbrennungskraftmaschine besonders effizient und effektiv betrieben werden kann, ist es erfindungsgemäß vorgesehen, dass die wenigstens eine Brenndauer des zeitlich ersten der Funken ermittelt wird. Der zeitlich erste Funke wird einer ersten Funkenart oder einer zweiten Funkenart in Abhängigkeit von der wenigstens einen ermittelten Brenndauer zugeordnet. Überschreitet wenigstens ein eine Häufigkeit einer der Funkenarten charakterisierender Wert einen Schwellenwert, so wird die wenigstens eine Maßnahme durchgeführt, um die Abweichung des Ist-Betriebs vom gewünschten Soll-Betrieb zu kompensieren.

Mit anderen Worten wird bei dem Verfahren erkannt, ob es sich bei dem ersten Funken um einen Funken der ersten Funkenart oder der zweiten Funkenart handelt. Gehört der erste Funken beispielsweise zur ersten Funkenart, so handelt es sich bei dem ersten Funken um einen sogenannten Gleitfunken, welcher eine nur relativ geringe Brenndauer aufweist. Handelt es sich bei dem ersten Funken um einen Funken der zweiten Funkenart, so handelt es sich bei dem ersten Funken beispielsweise um einen sogenannten Luftfunken, welcher gegenüber dem Gleitfunken eine wesentlich längere Brenndauer aufweist.

Kommt es zur Entstehung von Gleitfunken, so besteht im Vergleich zu Luftfunken ein hohes Risiko, dass das Kraftstoff-Luft-Gemisch in dem wenigstens einen Brennraum nicht wunschgemäß gezündet wird und in der Folge nicht wunschgemäß oder gar nicht verbrennt. Es kann somit zu Verbrennungsaussetzern kommen, welche die Laufruhe der Verbrennungskraftmaschine sowie ihren effizienten Betrieb beeinträchtigen.

Bei dem Verfahren kann nun besonders sicher und effektiv erkannt werden, ob der erste Funke ein Gleitfunke oder ein Luftfunke ist. In der Folge können durch das Durchführen der wenigstens einen Maßnahme Randbedingungen für die Verbrennung des Kraftstoff-Luft-Gemisches in dem Brennraum beeinflusst und eingestellt werden, so dass es nicht oder nicht mehr zur Entstehung von Gleitfunken und daraus resultierenden Verbrennungsaussetzern kommt. Somit ist eine adaptive Steuerung und/oder Regelung der Verbrennungskraftmaschine möglich, mittels welcher die Betriebspunkte der Verbrennungskraftmaschine beispielsweise weiter in Richtung eines mageren Schichtladebetriebs verschoben werden können, ohne dass es zu relevanten Beeinträchtigungen durch eine zu hohe Anzahl an eine unerwünscht kurze Brenndauer aufweisenden Gleitfunken kommt. Das Verfahren ermöglicht somit die Darstellung eines besonders effizienten und kraftstoffverbrauchsarmen Betriebs der Verbrennungskraftmaschine mit einer sehr hohen Laufruhe.

Insbesondere ist es möglich, mittels des Verfahrens strahlgeführte Brennverfahren von direkt einspritzenden Ottomotoren in einem Schichtladebetrieb zu realisieren. Jedoch ist es auch ohne weiteres denkbar, andere Betriebsarten wie beispielsweise einen Homogenbetrieb, einen Homogen-Mager-Betrieb, einen Kaltstart, einen Warmlauf, einen Heizbetrieb zum Erwärmen wenigstens einer Abgasnachbehandlungseinrichtung und/oder einen Homogen-Schicht-Betrieb effektiv und effizient darzustellen.

Insbesondere im mageren Schichtladebetrieb mit einem strahlgeführten Brennverfahren bei direkt einspritzenden Ottomotoren ist die Gefahr von Zündaussetzern hoch. Mittels dieses Verfahrens ist in diesem Zusammenhang eine weitere Optimierung der Zündfähigkeit des Kraftstoff-Luft-Gemisches innerhalb des mageren Schichtladebetriebs sowie innerhalb anderweitiger Betriebsarten möglich, indem die Verbrennung und insbesondere die mittels der Zündeinrichtung bewirkbare Zündung des Kraftstoff-Luft-Gemisches an individuelle Randbedingungen angepasst werden kann.

Weist die Verbrennungskraftmaschine mehrere Brennräume insbesondere in Form von Zylindern auf, so ist vorteilhafterweise eine zylinderselektive oder zylinderindividuelle Durchführung des Verfahrens vorgesehen. Dies bedeutet, dass jeder der Brennräume unabhängig von den anderen Brennräumen an für diesen Brennraum herrschende Randbedingungen angepasst werden kann, um eine robuste Verbrennung in jedem der Brennräume zu realisieren, die Häufigkeit an Verbrennungsaussetzern besonders gering zu halten und die Entflammungsphase des Kraftstoff-Luft-Gemisches insbesondere im Schichtladebetrieb zu stabilisieren. Dabei ist es vorgesehen, dass die wenigstens eine die Verbrennung beeinflussende Maßnahme für jeden Brennraum individuell und unabhängig von den anderen Brennräumen durchgeführt werden kann. Ferner kann dabei vorgesehen sein, dass für jeden der Brennräume unterschiedliche Maßnahmen durchgeführt werden können, um jeden der Brennräume an die für ihn herrschenden Randbedingungen individuell anpassen zu können. Dadurch ist es insbesondere möglich, eine besonders große Abmagerfähigkeit zu realisieren, was zu einem besonders geringen Kraftstoffverbrauch führt. Ferner können besonders hohe Abgasrückführraten realisiert werden bei gleichzeitiger Realisierung einer sehr guten Zündfähigkeit des Kraftstoff-Luft-Gemisches. In der Folge sind nur besonders geringe Abgas- und Partikelemissionen der Verbrennungskraftmaschine realisierbar.

In besonders vorteilhafter Ausgestaltung der Erfindung wird ein die durch die Zündeinrichtung ermittelte Brenndauer charakterisierendes Signal und/oder ein die Häufigkeit der einen Funkenart charakterisierendes Signal von der Zündeinrichtung bereitgestellt und an die von der Zündeinrichtung unterschiedliche, weitere Recheneinrichtung insbesondere in Form des Motorsteuergeräts der Verbrennungskraftmaschine übermittelt. Die weitere Recheneinrichtung kann dann die wenigstens eine Maßnahme durchführen, um das Auftreten von Gleitfunken zu vermeiden oder ihre Häufigkeit gering zu halten. Durch die Funktionsaufteilung zwischen der Zündeinrichtung und dem Motorsteuergerät kann das Verfahren schnell und kostengünstig durchgeführt werden. Auch die Ermittlung der Häufigkeit bzw. des die Häufigkeit charakterisierenden Werts kann bereits mittels der Zündeinrichtung erfolgen, um somit den Rechenaufwand für das Motorsteuergerät gering zu halten.

Das Verfahren kann somit ohne zusätzliche elektrische Leitungen zwischen der Zündeinrichtung und der Recheneinrichtung sowie ohne zusätzliche Messtechnik beispielsweise in der Zündeinrichtung, des Motorsteuergeräts oder der Verbrennungskraftmaschine insgesamt durchgeführt werden. In der Folge können das Gewicht, die Kosten und der Bauraumbedarf der Verbrennungskraftmaschine in einem besonders geringen Rahmen gehalten werden.

Als besonders vorteilhaft hat es sich gezeigt, wenn als das die Brenndauer charakterisierende Signal ein Signal verwendet wird, welches eine Änderung eines von dem Motorsteuergerät an die Zündeinrichtung übermittelten Ansteuerstroms charakterisiert. Hierdurch kann die Klasifizierung der Brenndauer des ersten Funkens auf besonders einfache und somit kostengünstige Weise übermittelt werden.
Im Rahmen des Verfahrens wird eine Rückmeldung in Form des Signals von der Zündeinrichtung an die Recheneinrichtung genutzt, um eine Klasifizierung wenigstens einer Brenndauer zu erfassen. Hierbei kann beispielsweise die vorhandene bidirektionale Schnittstelle genutzt werden, da ein Datenübertragungspfad, über die das Signal von der Zündeinrichtung an die weitere Recheneinrichtung (Motorsteuergerät) übertragen wird, vorzugsweise auch dazu genutzt wird, das Signal insbesondere in Form einer Änderung des Ansteuerstroms von der weiteren Recheneinrichtung (Motorsteuergerät) an die Zündeinrichtung zu übermitteln. Durch eine solche bidirektionale Schnittstelle kann auf besonders einfache, kosten- und bauraumgünstige Weise ermittelt werden, ob die Verbrennungskraftmaschine und insbesondere ihr wenigstens einer Brennraum in einem gewünschten, optimalen Betriebspunkt betrieben wird oder nicht. Infolge der Analyse der Brenndauer ist es dann möglich, eine zylinderselektive Optimierung eines oder mehrerer Parameter der Verbrennungskraftmaschine vorzunehmen, um eine effektive und effiziente Verbrennung in dem wenigstens einen Brennraum zu realisieren.

Bei einer besonders vorteilhaften Ausführungsform der Erfindung wird der Schwellenwert der Brenndauerinformation variabel eingestellt. Der Schwellenwert kann somit beispielsweise an unterschiedliche Randbedingungen und/oder an unterschiedliche Betriebszustände oder Betriebsarten der Verbrennungskraftmaschine bedarfsgerecht angepasst werden, so dass ein besonders effizienter Betrieb mit einer sehr hohen Laufruhe der Verbrennungskraftmaschine realisierbar ist.

In weiterer besonders vorteilhafter Ausgestaltung der Erfindung wird die wenigstens eine Brenndauer des ersten Funkens anhand eines zeitlichen Verlaufs eines Sekundärstroms der Zündeinrichtung ermittelt. Die Brenndauer des ersten Funkens kann dabei aus einer jeweiligen zeitlichen Dauer eines Entladevorgangs einer Sekundärspule der beispielsweise als Zündspule oder als Zündtransformator ausgebildeten Zündeinrichtung anhand des Sekundärstroms bestimmt werden. Die Messung des Sekundärstroms kann hierbei an der Sekundärspule bzw. an einem Sekundärkreis zur Zündkerze erfolgen.

Bei einer weiteren besonders vorteilhaften Ausführungsform der Erfindung wird die wenigstens eine Brenndauer des ersten Funkens anhand eines zeitlichen Verlaufs eines Primärstroms in der Zündeinrichtung ermittelt. Während der Brenndauer des ersten Funkens nimmt der Primärstrom beispielsweise den Wert 0 an. Somit kann die Brenndauer des ersten Funkens bis zum Wiedereinschalten des Primärstroms durch den Strompegel bestimmt werden. Eine andere Möglichkeit besteht darin, eine jeweilige zeitliche Dauer von Lade- bzw. Nachladezeiten einer Primärspule der beispielsweise als Zündspule bzw. Zündtransformator ausgebildeten Zündeinrichtung anhand des zeitlichen Verlaufs des Primärstroms zu ermitteln. Die zeitliche Dauer zwischen den Lade- und Nachladezeiten entspricht der Brenndauer des ersten Funkens. Hierdurch kann die Brenndauer des ersten Funkens auf besonders einfache Weise ermittelt werden.

Eine weitere Ausführungsform zeichnet sich dadurch aus, dass als die Maßnahme eine Menge des in den Brennraum eingebrachten Kraftstoffes des Kraftstoff-Luft-Gemisches verändert wird. Durch die Variation der Menge des Kraftstoffes kann die Verbrennung in dem wenigstens einen Brennraum, welcher insbesondere als Zylinder der Verbrennungskraftmaschine ausgebildet ist, besonders effektiv beeinflusst werden, um somit Zünd- bzw. Verbrennungsaussetzer zu vermeiden oder die Anzahl an Verbrennungsaussetzern besonders gering zu halten.

Eine weitere, besonders effektive Möglichkeit, die Verbrennung zu beeinflussen ist, als die Maßnahme einen Zündzeitpunkt und/oder einen Einspritzzeitpunkt zu verändern. Hierbei ist es beispielsweise möglich, den Zündzeitpunkt und den Einspritzzeitpunkt zeitlich parallel zu verändern, wobei eine Dauer zwischen dem Zündzeitpunkt und dem Einspritzzeitpunkt gleich bleibt.

Vorteilhafterweise ist es bei einer weiteren Ausführungsform der Erfindung vorgesehen, dass als die Maßnahme der Einspritzzeitpunkt relativ zum Zündzeitpunkt verändert wird. Hierbei wird ein sogenannter Differenzwinkel, d.h. eine zeitliche Dauer zwischen dem Einspritzen des Kraftstoffes und dem Zünden desselben verändert.

Alternativ oder zusätzlich ist es möglich, eine Anzahl an Einspritzvorgängen zum Einbringen des Kraftstoffes in den Brennraum und/oder eine zeitliche Abfolge der Einspritzvorgänge zu ändern. Vorzugsweise wird die wenigstens eine Maßnahme so lange und/oder so häufig durchgeführt, bis die Häufigkeit der zugehörigen Funkenart, insbesondere des Gleitfunkens, abnimmt und beispielsweise unter den Schwellenwert sinkt.

Vorzugsweise erfolgt die Kompensation der Abweichung, d.h. die Durchführung der wenigstens einen Maßnahme separat für jeden Brennraum, d.h. zylinderindividuell oder zylinderselektiv. Dadurch ist ein besonders effektiver und effizienter Betrieb der Verbrennungskraftmaschine mit nur sehr geringen Emissionen und einer sehr hohen Laufruhe realisierbar.

Zur Erfindung gehört auch eine Verbrennungskraftmaschine der im Oberbegriff des Patentanspruchs 10 angegebenen Art. Zur Realisierung eines besonders effektiven und effizienten Betriebs der Verbrennungskraftmaschine ist es erfindungsgemäß vorgesehen, dass die Recheneinrichtung der Verbrennungskraftmaschine dazu ausgelegt ist, die wenigstens eine Brenndauer des zeitlich ersten der Funken zu ermitteln, um den ersten Funken einer ersten Funkenart oder einer zweiten Funkenart in Abhängigkeit von der wenigstens einen ermittelten Brenndauer zuzuordnen und die wenigstens eine Maßnahme durchzuführen, wenn wenigstens ein eine Häufigkeit einer der Funkenarten charakterisierender Wert einen Schwellenwert überschreitet. Mit anderen Worten ist die Recheneinrichtung zum Durchführen des erfindungsgemäßen Verfahrens ausgelegt. Vorteilhafte Ausgestaltungen des erfindungsgemäßen Verfahrens sind als vorteilhafte Ausgestaltungen der erfindungsgemäßen Verbrennungskraftmaschine anzusehen und umgekehrt. Als besonders vorteilhaft hat es sich gezeigt, wenn zusätzlich für die Kompensation eine Abweichung einer Ist-Laufruhe von einer Soll-Laufruhe und/oder ein Verbrennungsaussetzer und/oder eine Abweichung eines Ist-Drucks von einem SollDruck und/oder eine Abweichung eines Ist-Druckverlaufs von einem Soll-Druckverlauf in wenigstens einem Brennraum erfasst wird.

Alle geschilderten Möglichkeiten, Verfahren und Maßnahmen zur Kompensation der Abweichung können dauerhaft während des Betriebs der Verbrennungskraftmaschine angewendet werden, so dass eine dauerhafte Adaption der zylinderselektiven Korrekturen erfolgt. Das Verfahren kann für alle Betriebsarten einer Verbrennungskraftmaschine genutzt werden. Besonders vorteilhaft ist die Durchführung in einem mageren Schichtladebetrieb, in welchem die Gefahr von Verbrennungsaussetzern besonders hoch ist.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: ein Diagramm mit einem zeitlichen Verlauf eines Primärstroms und eines Sekundärstroms einer Zündeinrichtung in Form einer Zündspule einer Verbrennungskraftmaschine, bei welcher mittels der Zündspule mehrere Funken in einem Brennraum in Form eines Zylinders der Verbrennungskraftmaschine erzeugt werden, um ein Kraftstoff-Luft-Gemisch in dem Zylinder zu zünden;
- Fig. 2: ein Diagramm mit einem jeweiligen zeitlichen Verlauf des Primärstroms, des Sekundärstroms und einer Sekundärspannung der Zündspule, wobei die Verläufe die Entstehung eines Gleitfunkens charakterisieren;
- Fig. 3: ein weiteres Diagramm mit einem jeweiligen Verlauf des Primärstroms, des Sekundärstroms und der Sekundärspannung der Zündspule, wobei die Verläufe die Entstehung eines erwünschten Luftfunkens charakterisieren;
- Fig. 4: ein Diagramm zur Veranschaulichung einer Funkendauerverteilung des zeitlich ersten der Funken; und
- Fig. 5: ein Diagramm mit zeitlichen Verläufen von unterschiedlichen Signalen, mittels welchen ermittelt werden kann, ob es sich bei dem zeitlich ersten Funken um einen erwünschten Luftfunken oder um einen erwünschten Gleitfunken handelt.

In den Figuren sind gleiche oder funktionsgleiche Elemente mit gleichen Bezugszeichen versehen.

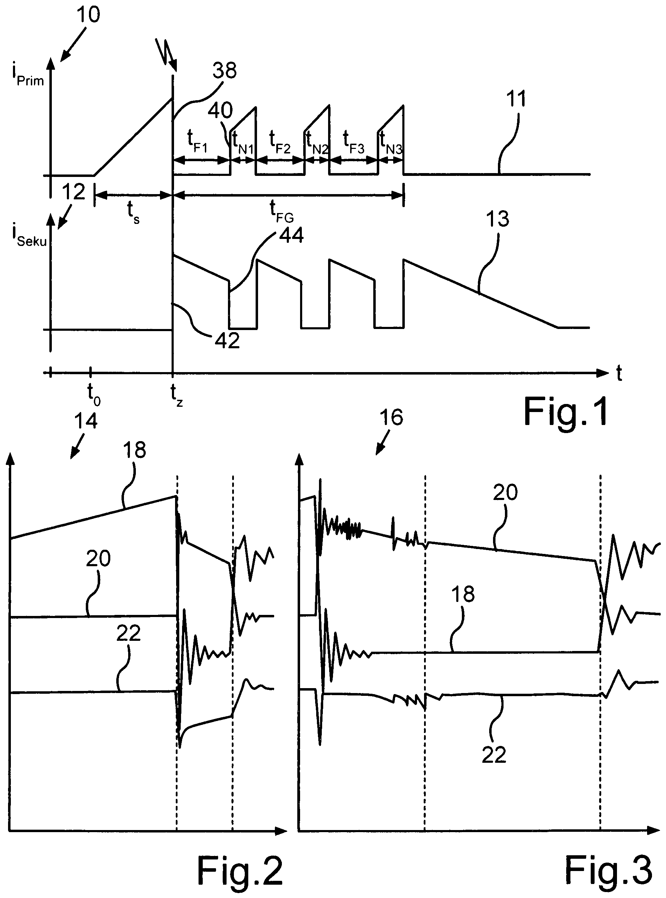

Fig. 1 zeigt ein erstes Diagramm 10 mit einem zeitlichen Verlauf 11 einer Stromstärke eines Primärstroms i_{Prim} einer Zündspule einer Verbrennungskraftmaschine. Die Verbrennungskraftmaschine ist dabei als Hubkolben-Verbrennungskraftmaschine ausgebildet und dient zum Antreiben eines Kraftwagens, insbesondere eines Personenkraftwagens. Die Verbrennungskraftmaschine weist eine Mehrzahl von Brennräumen in Form von Zylindern auf. Jedem der Zylinder ist ein Injektor zugeordnet, mittels welchem eine vorgebbare Menge an flüssigem Kraftstoff in den jeweiligen Zylinder direkt eingespritzt wird. Bei der Verbrennungskraftmaschine handelt es sich somit um eine direkt einspritzende Verbrennungskraftmaschine, insbesondere um einen direkt einspritzenden Ottomotor.

Den jeweiligen Zylindern wird auch Luft über wenigstens ein Ansaugmodul der Verbrennungskraftmaschine zugeführt. Die in die jeweiligen Zylinder einströmende Luft und der jeweilig eingebrachte Kraftstoff bilden ein jeweiliges Kraftstoff-Luft-Gemisch, welches mittels wenigstens einer jeweiligen Zündkerze des jeweiligen Zylinders gezündet wird bzw. gezündet werden soll, um im Anschluss an diese Zündung zu verbrennen.

Bei der Verbrennungskraftmaschine ist dabei eine sogenannte Mehrfachzündung vorgesehen, welche auch als Mehrfunkenzündung oder als Multi-Spark-Zündung bezeichnet wird. Hierzu werden mittels der Zündkerze und der mit der Zündkerze gekoppelten Zündeinrichtung in Form der Zündspule mehrere Zündfunken in dem jeweiligen Zylinder erzeugt, wobei diese mehreren Zündfunken zeitlich aufeinanderfolgend, d.h. zeitlich nacheinander erzeugt werden.

Fig. 1 zeigt auch ein zweites Diagramm 12 mit einem zeitlichen Verlauf 13 eines Sekundärstroms i_{Seku} der jeweiligen Zündspule. Beide Verläufe 11, 13 sind somit in Abhängigkeit von der Zeit t aufgetragen.

Die jeweilige Zündspule, welche üblicherweise auch als Zündtransformator bezeichnet wird, weist eine Primärseite und eine Sekundärseite auf. Die Primärseite ist mit der Bordnetzspannung des Kraftwagens über eine entsprechende Einstellvorrichtung verbunden, mittels welcher der Primärstrom i_{Prim} eingestellt, d.h. gesteuert und/oder geregelt werden kann. Bei der Einstellvorrichtung handelt es sich beispielsweise um eine Recheneinrichtung eines Motorsteuergeräts der Verbrennungskraftmaschine. Die Zündspule weist ferner eine Sekundärseite auf, welche mit der Primärseite gekoppelt ist. Dabei ist die Sekundärseite mit der Zündkerze verbunden, mittels welcher die einzelnen Funken erzeugt werden.

Zum Zeitpunkt t₀ wird auf der Primärseite in einem entsprechenden Stromkreis der Zündspule ein Primärstrom i_{Prim} erzeugt, wobei die Amplitude des Primärstroms i_{Prim} im Laufe der Zeit ansteigt. Sobald eine entsprechende Amplitude des Primärstroms i_{Prim} erreicht ist, erfolgt die Zündung zu einem Zündzeitpunkt t_{z}. Die zeitliche Dauer zwischen dem Zündzeitpunkt t_{z} und dem Zeitpunkt t₀ wird auch als Schließzeit tₛ bezeichnet. Zum Zündzeitpunkt t_{z} wird der Primärstrom i_{Prim} abgeschaltet, wodurch auf der Sekundärseite beispielsweise in einem Stromkreis der Zündspule ein Sekundärstrom i_{Seku} erzeugt wird. Infolge des Sekundärstroms i_{Seku} wird an der Zündkerze ein Funken erzeugt. Die zeitliche Dauer des Brennens des Funkens wird auch als Brenndauer bezeichnet.

Die Brenndauer des zeitlich ersten der mehreren Funken ist mit t_{F1} bezeichnet. Für die Brenndauer t_{F1} des ersten Funkens nimmt der Primärstrom i_{Prim} den Wert 0 an. Die Amplitude des Sekundärstroms i_{Seku} nimmt während der Brenndauer t_{F1} des ersten Funkens stetig ab. Im Anschluss an die Brenndauer t_{F1} des ersten Funkens wird der Primärstrom i_{Prim} wieder zugeschaltet, wobei sich die Amplitude des Primärstroms i_{Prim} über die Zeit t stetig erhöht. Die zeitliche Dauer, während welcher der Primärstrom i_{Prim} nach der Brenndauer t_{F1} des ersten Funkens wieder zugeschaltet wird, wird als erste Nachladezeit t_{N1} bezeichnet. Während der ersten Nachladezeit t_{N1} nimmt der Sekundärstrom i_{Seku} den Wert 0 an.

Nach Ablauf der ersten Nachladezeit t_{N1} wird der Primärstrom i_{Prim} wieder abgeschaltet. Somit wird ein zeitlich auf den ersten Funken folgender, zweiter Funke an der Zündkerze erzeugt, welcher für die entsprechende Brenndauer t_{F2} brennt. Nach Ablauf der zweiten Brenndauer t_{F2} wird der Primärstrom i_{Prim} für eine zweite Nachladezeit t_{N2} wieder zugeschaltet. Nach Ablauf der zweiten Nachladezeit t_{N2} wird durch Abschalten des Primärstroms i_{Prim} ein entsprechender Sekundärstrom i_{Seku} erzeugt, infolge dessen ein dritter Funke an der Zündkerze erzeugt wird. Der dritte Funke brennt dabei für eine dritte Brenndauer t_{F3}.

Die Schließzeit tₛ ist eine erste Ladezeit, während welcher die Zündspule sozusagen aufgeladen wird, bevor es zur Erzeugung des ersten, während der ersten Brenndauer t_{F1} brennenden Funkens kommt. Die erste Nachladezeit t_{N1} ist somit eine zweite Ladezeit, wobei die zweite Nachladezeit t_{N2} eine dritte Ladezeit und die dritte Nachladezeit t_{N3} eine vierte Ladezeit ist.

Im Rahmen eines Verfahrens zum Betreiben der Verbrennungskraftmaschine wird nun die erste Brenndauer t_{F1} des ersten Funkens beispielsweise als Zeit zwischen dem Ende der ersten Ladezeit (Schließzeit tₛ) und dem Beginn der zweiten Ladezeit (erste Nachladezeit t_{N1}) in der Zündspule, d.h. mittels dieser, erfasst. Hierzu umfasst die Zündspule beispielsweise eine von dem Motorsteuergerät unterschiedliche, zusätzlich dazu vorgesehene, weitere Recheneinrichtung. Die Erfassung der ersten Brenndauer t_{F1} kann beispielsweise über die Messung eines jeweiligen Ein- und Ausschaltgradientens des Primärstroms i_{Prim} bzw. dessen zeitlichen Verlaufs 11 und/oder über die Messung des jeweiligen Gradienten des Sekundärstroms i_{Seku} bzw. dessen zeitlichen Verlaufs 13 erfolgen.

Die Information über die erste Brenndauer t_{F1} des ersten Funkens im Mehrfachzündungsbetrieb wird vorzugsweise in der Zündspule, insbesondere in einer Speichereinrichtung der Zündspule abgelegt, d.h. gespeichert und - wie im Folgenden erläutert wird - in einem Zwischenspeicher statistisch ausgewertet.

Trotz entwicklungsseitiger Absicherung der Applikation der Verbrennungskraftmaschine kann es bei ungünstigen Kombinationen des Lastpunkts der Verbrennungskraftmaschine, der Ladungsbewegung im Zylinder und des individuellen Kraftstoffsprays des Injektors zu kritischen Situationen an der Zündkerze des jeweiligen Zylinders kommen, so dass beispielsweise eine starke Benetzung von Elektroden der Zündkerze und bei entsprechendem Zündzeitpunkt eine Störung des jeweiligen, ausgelösten Funkens auftritt. Im Extremfall tritt der erste Funke als Gleitfunke auf, welcher einen hohen Risikofaktor für einen folgenden Verbrennungsaussetzer darstellt.

Üblicherweise tritt der jeweilige Funken als gewünschter, sogenannter Luftfunken auf, mittels welchem eine gewünschte Zündung und in der Folge eine gewünschte Verbrennung des Kraftstoff-Luft-Gemisches bewirkt wird. Bei dem Gleitfunken handelt es sich somit um eine unerwünschte, erste Funkenart, wobei es sich bei einem Luftfunken um eine erwünschte, zweite Funkenart handelt. Bei dem Verfahren ist es vorgesehen, die Brenndauer t_{F1} des ersten Funkens zu ermitteln und den ersten Funken in Abhängigkeit von der ermittelten, ersten Brenndauer t_{F1} der ersten Funkenart oder der zweiten Funkenart zuzuordnen. Somit findet eine Gleitfunkenerkennung statt. Durch die Erkennung des Auftretens von Gleitfunken kann darauf rückgeschlossen werden, dass ein tatsächlicher Ist-Betrieb der Verbrennungskraftmaschine zumindest bezogen auf einen der Zylinder, in welchem das Auftreten von Gleitfunken ermittelt wird, von einem gewünschten Soll-Betrieb abweicht. In der Folge kann anhand der Gleitfunkenerkennung wenigstens eine Maßnahme ergriffen, d.h. durchgeführt werden, mittels welcher die Abweichung des Ist-Betriebs vom Soll-Betrieb kompensiert wird. Mit anderen Worten wird mittels der wenigstens einen Maßnahme die Entstehung von Gleitfunken vermieden und/oder eine Auftrittshäufigkeit von Gleitfunken im Vergleich zu einem Zeitpunkt vor der Durchführung der wenigstens einen Maßnahme reduziert.

Anhand von Fig. 2 und 3 ist veranschaulicht, wodurch sich ein Gleitfunke von einem Luftfunken unterscheidet und wie demzufolge ermittelt werden kann, ob es sich bei dem ersten Funken um einen Gleitfunken oder um einen Luftfunken handelt. Fig. 2 und 3 zeigen ein jeweiliges Diagramm 14, 16 mit jeweiligen, zeitlichen Verläufen 18, 20 und 22. Der Verlauf 18 ist dabei ein zeitlicher Verlauf des Primärstroms i_{Prim}. Der Verlauf 20 ist ein zeitlicher Verlauf des Sekundärstroms i_{Seku}, und der Verlauf 22 ist ein zeitlicher Verlauf einer Sekundärspannung U_{Seku} der Sekundärseite bzw. im Stromkreis auf der Sekundärseite.

Im Vergleich zu einem Luftfunken weist ein Gleitfunke eine wesentlich kürzere Brenndauer auf, die sich eindeutig von Brenndauern mehr oder weniger gestörter Luftfunken unterscheidet. Zu den in Fig. 2 gezeigten Verläufen 18, 20, 22 kommt es, wenn der erste Funken als Gleitfunken auftritt. Tritt im Gegensatz dazu der erste Funken als Luftfunken auf, so kommt es zu den in Fig. 3 gezeigten Verläufen 18, 20, 22.

Die Brenndauern von Gleitfunken unterscheiden sich dabei eindeutig von den Brenndauern von Luftfunken, selbst wenn die Luftfunken durch hohe Strömungsgeschwindigkeiten und/oder durch Benetzung der Elektroden der Zündkerze von Kraftstoffspray sehr stark gestört werden. Dadurch lässt sich eine eindeutige Zuordnung der Funkenarten zu den Brenndauern darstellen.

Mittels des Motorsteuergeräts kann nun über eine vorgegebene bzw. vorgebbare Zeit- bzw. Betriebsdauer der Verbrennungskraftmaschine eine statistische Bewertung aller während dieser Betriebsdauer auftretenden ersten Funken durchgeführt werden, wobei jeweilige Werte ermittelt werden, welche eine jeweilige Häufigkeit des Auftretens der jeweiligen Funkenart während dieser Betriebsdauer charakterisieren. Dies kann auch mittels der weiteren Recheneinrichtung der Zündspule, d.h. in der Zündspule selbst durchgeführt werden.

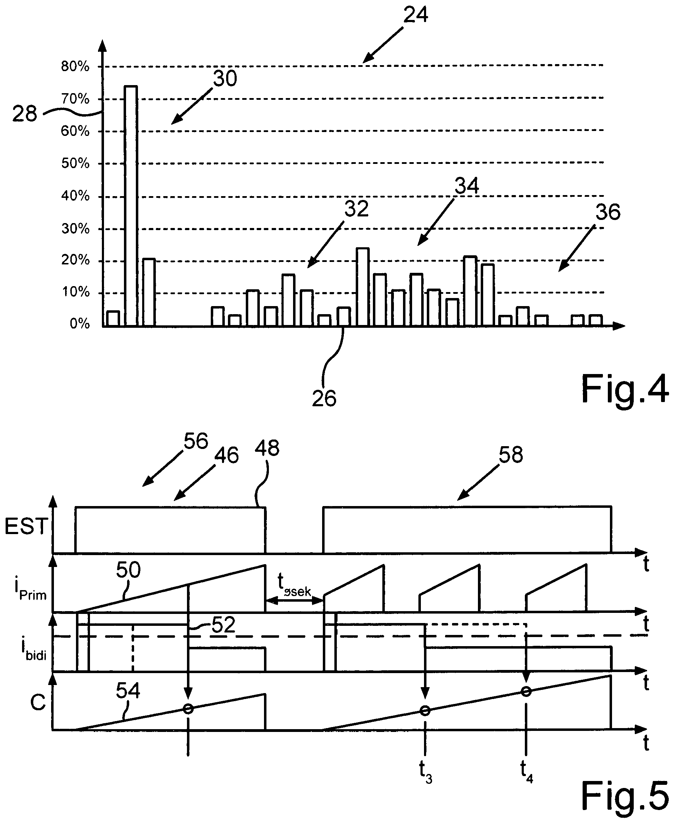

Anhand von Fig. 4 ist diese statistische Auswertung veranschaulicht. Fig. 4 zeigt ein Diagramm 24, auf dessen Abszisse 26 die Brenndauer in µs aufgetragen ist. Auf der Ordinate 28 des Diagramms 24 ist die Häufigkeit in der Einheit % aufgetragen, mit welcher die jeweiligen Brenndauern und somit die jeweiligen Funkenarten während der Betriebsdauer auftreten. Somit charakterisieren Balken 30 im Diagramm 24 die Häufigkeit des Auftretens von Gleitfunken, während Balken 32 die Häufigkeit von Luftfunken mit starker Störung, Balken 34 die Häufigkeit von Luftfunken mit mäßiger Störung und Balken 36 die Häufigkeit von Luftfunken ohne Störung charakterisieren. Überschreitet nun ein die Häufigkeit der Gleitfunken charakterisierender Wert, d.h. beispielsweise wenigstens einer der Balken 30, einen Schwellenwert, so wird die wenigstens eine Maßnahme durchgeführt, um die Abweichung des Ist-Betriebs vom Soll-Betrieb zu kompensieren.

Die anhand von Fig. 4 veranschaulichte, statistische Auswertung kann dabei für jeden der Zylinder der Verbrennungskraftmaschine einzeln und somit individuell bzw. selektiv erfolgen, so dass für jeden der Zylinder unabhängig von den übrigen, anderen Zylindern entsprechende Maßnahmen ergriffen werden können, um die Abweichung zu kompensieren. Hierbei können für jeden Zylinder unabhängig von den übrigen Zylindern eigene Maßnahmen durchgeführt werden, um jeden Zylinder einzeln und selektiv hinsichtlich einer robusten Verbrennung und der Reduzierung von Verbrennungsaussetzern zu optimieren.

Mit anderen Worten wird vorzugsweise in der Zündspule die erste Brenndauer t_{F1} jedes ersten Funkens gemessen, wobei die erste Brenndauer t_{F1}auch als Funkendauer t_{Bsek} bezeichnet wird. Die jeweilige Funkendauer t_{Bsek} und somit der zugehörige, erste Funke wird in Luft- oder Gleitfunken eingeteilt und in einem Speicher, insbesondere in einem Zwischenspeicher, abgelegt, um daraus eine statistische Bewertung der Auftrittshäufigkeit von Gleitfunken durchzuführen.

Vorzugsweise erfolgt die Messung der jeweiligen Funkendauer t_{Bsek} über eine Messung der Zeit bzw. einer Dauer zwischen einer Abschalte-Flanke 38 des Primärstromsignals in Form des zeitlichen Verlaufs 11 nach der Erstbeladung und einer Einschalte-Flanke 40 des Primärstromsignals zur Zweitbeladung. Alternativ kann die Funkendauer t_{Bsek} auch über die Messung der Zeit zwischen einer Einschalte-Flanke 42 des Sekundärstromsignals in Form des zeitlichen Verlaufs 13 zur Erstentladung und einer Abschalte-Flanke 44 des Sekundärstromsignals am Ende der Erstentladung erfolgen.

Überschreitet der die Häufigkeit der Gleitfunken charakterisierende Wert den festgelegten, adaptiven oder regelbaren und dem jeweiligen Zylinder zugeordneten Schwellenwert beispielsweise in einem Betriebspunkt, so stellt die jeweilige Zündspule des jeweiligen Zylinders beispielsweise ein entsprechendes, die Überschreitung charakterisierendes Signal bereit, welches an das Motorsteuergerät übermittelt wird. Dieses kann dann für den jeweiligen Zylinder die Durchführung der wenigstens einen Maßnahme bewirken.

Anhand von Fig. 5 ist eine Möglichkeit veranschaulicht, wie die mittels der Zündspule ermittelte Funkendauer t_{Bsek} bzw. ein den ersten Funken als Gleitfunken oder als Luftfunken charakterisierendes Signal von der Zündspule an das Motorsteuergerät auf besonders einfache Weise, insbesondere ohne zusätzliche Leitungen, übermittelt werden kann. Dabei zeigt Fig. 5 ein Diagramm 46 mit jeweiligen zeitlichen Verläufen 48, 50, 52, 54 von jeweiligen Signalen, welche im Folgenden erläutert werden.

Über eine bidirektionale Schnittstelle wird an der Zündspule vom Motorsteuergerät über ein Ansteuersignal EST eine Spannung angelegt, wobei der zeitliche Verlauf 48 den zeitlichen Verlauf des Signals EST charakterisiert. Diese Spannung wird dabei an einen Stromkreis der Zündspule angelegt. Aus dieser Spannung resultiert ein Ansteuerstrom i_{bidi} im entsprechenden Stromkreis der Zündspule. Nach einer bestimmten Zeit wird ein Widerstand in diesem Stromkreis in der Zündspule umgeschaltet. Dadurch entsteht ein Sprung im zeitlichen Verlauf 52, welcher den zeitlichen Verlauf des Ansteuerstroms i_{bidi} charakterisiert. Dieser Sprung wird mittels des Motorsteuergeräts erfasst. Dieser Sprung bzw. der Zeitpunkt dieses Sprungs des Verlaufs 52 wird genutzt, um einen Zähler bzw. ein Zählersignal C, der mit Beginn des Signals EST gestartet wird, zu stoppen. Der Wert des Zählers C bzw. der Wert seines zeitlichen Verlaufs 54 wird von der Zündspule an das Motorsteuergerät übertragen. Der Wert des Zählers C wird mit einem Schwellenwert verglichen.

Ermittelt die Zündspule durch Auswertung der Funkendauer t_{Bsek}, dass der erste Funken als Gleitfunken und nicht als Luftfunken aufgetreten ist, so wird spulenseitig der Ansteuerstrom i_{bidi} später von einem höheren auf einen demgegenüber geringeren Wert umgeschaltet als bei Erkennung des Auftretens eines Luftfunkens. Mit anderen Worten kommt es zu dem Sprung im Verlauf 52 später, wenn ein Gleitfunken auftritt im Vergleich zum Auftreten eines Luftfunkens. Dadurch ist der an das Motorsteuergerät übertragene Wert des Zählers C größer, so dass das Motorsteuergerät darauf rückschließen kann, dass ein Gleitfunken aufgetreten ist.

Im Diagramm 46 sind zwei Teilbereiche 56, 58 des Signals EST zu erkennen. Mit dem jeweiligen Beginn des Teilbereichs 56 und 58 wird auch der Zähler C gestartet. Der erste Teilbereich 56 ist dabei ein EST-Puls, welcher der Diagnose dient. Anhand des ersten EST-Pulses wird beispielsweise ermittelt, ob der Primärstrom i_{Prim} anliegt und somit, ob beispielsweise ein Kurzschluss oder eine offene Leitung vorliegt. Bei dem Teilbereich 58 handelt es sich um einen zweiten EST-Puls, welcher schließlich dazu verwendet wird, um zu ermitteln, ob es sich bei dem ersten Funken um einen Gleitfunken oder um einen Luftfunken handelt.

Kommt es zu einem Zeitpunkt t₃ zu dem Sprung des Verlaufs 52, so wird ermittelt, dass es sich bei dem ersten Funken um einen Luftfunken handelt. Kommt es zu dem Sprung des Verlaufs 52 erst zu einem gegenüber dem Zeitpunkt t₃ späteren Zeitpunkt t₄, so wird dadurch ermittelt, dass die Brenndauer t_{F1} des ersten Funkens für einen Luftfunken zu kurz war, so dass es sich bei dem ersten Funken um einen Gleitfunken handelt. Auf diese Weise kann beispielsweise auch ein Signal an das Motorsteuergerät übermittelt werden, welches die Überschreitung des Schwellenwerts durch den die Häufigkeit charakterisierenden Wert charakterisiert, falls eine solche Auswertung ebenfalls bereits in der Zündspule erfolgt.

Im Motorsteuergerät kann der Wert des Zählers C dann verwendet werden, um beispielsweise den von der Zündspule an das Motorsteuergerät gemeldeten Zustand des jeweiligen Zylinders mit Aussetzereinträgen dieses Zylinders zu vergleichen. In Abhängigkeit von diesem Vergleich können dann Maßnahmen durchgeführt werden, um Verbrennungsaussetzer auf diesem Zylinder zu vermeiden oder zu reduzieren.

Dabei kann vorgesehen sein, dass prophylaktisch vor dem Auftreten von Verbrennungsaussetzern und/oder bei erhöhter Aussetzerhäufigkeit auf diesem Zylinder die wenigstens eine Maßnahme durchgeführt wird. Ferner kann auch bei Auftreten einer erhöhten Laufunruhe und/oder bei Auftreten von Verbrennungsaussetzern wenigstens eine entsprechende Gegenmaßnahme durchgeführt werden.

Bei dem Ansteuerstrom i_{bidi} bzw. bei dessen Verlauf 52 handelt es sich somit um ein die Funkenart charakterisierendes Signal, welches im Mehrfachzündungsbetrieb als Änderung des Ansteuerstroms i_{bidi} an das Motorsteuergerät übertragen wird. Dieses von der Zündspule an das Motorsteuergerät übertragene Signal charakterisiert den Zustand der Entflammung im jeweiligen Zylinder. Ebenso ist es jedoch möglich, mit diesem Signal beispielsweise eine Temperatur und somit das etwaige Auftreten einer Übertemperatur der Zündspule an das Motorsteuergerät zu übertragen. Das an das Motorsteuergerät übermittelte Signal in Form des Ansteuerstroms i_{bidi} kann vorm Motorsteuergerät dann dazu genutzt werden, um die geschilderte, statistische Auswertung der Funkendauer t_{Bsek} bzw. der Brenndauer t_{F1} des ersten Funkens zu nutzen, und um in Abhängigkeit von dieser statistischen Auswertung die wenigstens eine Maßnahme zur Kompensation der Abweichung durchzuführen bzw. deren Durchführung zu bewirken.

Als Maßnahme zur Kompensation der Abweichung kann beispielsweise ein sogenannter Differenzwinkel zwischen einem Einspritzzeitpunkt und einem Zündzeitpunkt verändert werden. Mit anderen Worten wird eine Zeitdauer zwischen einem Zeitpunkt, zu welchem der Kraftstoff in den Zylinder eingespritzt wird, und einem Zeitpunkt, zu welchem das Kraftstoff-Luft-Gemisch gezündet wird, verändert. Der Kraftstoff wird beispielsweise mittels einer Mehrfacheinspritzung in den Zylinder eingebracht, wobei mehrere Einspritzungen durchgeführt werden. Bei der Veränderung des Differenzwinkels wird somit der Zündzeitpunkt relativ zum Einspritzzeitpunkt verändert. Alternativ kann vorgesehen sein, dass der Einspritzzeitpunkt und der Zündzeitpunkt parallel und insbesondere zylinderselektiv verschoben werden, ohne dass sich die Zeitdauer zwischen dem Einspritzzeitpunkt und dem Zündzeitpunkt verändert. Alternativ oder zusätzlich kann auch die Kraftstoffmasse, die Anzahl an Einspritzungen und/oder eine zeitliche Abfolge der Einspritzungen derart geändert werden, dass bei demjenigen der Zylinder, bei dem eine übermäßig hohe Häufigkeit von Gleitfunken ermittelt wird, die relative Anzahl der Gleitfunken abnimmt.

Alternativ oder zusätzlich kann auch ein Eingriff in die Laststeuerung des Zylinders über zylinderselektive Einstellungen der Einspritzmenge und/oder einer der Einspritzungen bei Mehrfacheinspritzung erfolgen. Ebenso kann ein Eingriff in die Parametrierung der Mehrfachzündung erfolgen. Ferner ist es möglich, Parameteränderungen bzw. wenigstens eine Parameteränderung auf mehrere Zylinder einer Zylinderbank entsprechend einer Zündreihenfolge und/oder auf alle Zylinder der Verbrennungskraftmaschine anzuwenden. Vorteilhafterweise erfolgen die genannten Eingriffe über frei programmierbare Kennfelder im Motorsteuergerät.

Vorzugsweise ist vorgesehen, dass die geschilderte Änderung der Parameter inkremental durchgeführt wird, wobei nach jedem Verstellvorgang eine Rückmeldung an die Zündspule erfolgt, die wiederum ihre Statistik über die Gleitfunken im Verhältnis zu den Luftfunken neu bewertet bzw. den Verlauf derer verfolgt. Dies bedeutet, dass in der Zündspule weiterhin eine statistische Auswertung der jeweiligen Brenndauern mit der Unterscheidung zwischen Gleitfunken und Luftfunken erfolgt, wobei zusätzlich die Änderung der jeweiligen Auftrittshäufigkeit beobachtet wird.

Ändert sich nach der inkrementellen Verstellung eines oder mehrerer der genannten Parameter im Motorsteuergerät nichts an der Auftrittshäufigkeit der Gleitfunken im definierten Kennfeldbereich oder Betriebszustand und sinkt die Gleitfunkenhäufigkeit nicht unter ein definiertes Niveau, so wird das Signal zum Signalisieren des übermäßig häufigen Auftretens der Gleitfunken von der Zündspule erneut an das Motorsteuergerät übermittelt und eine Verstellung wird wiederholt, bis die Auftrittshäufigkeit der Gleitfunken im definierten Kennfeldbereich oder Betriebszustand abnimmt. Alternativ kann auch ohne Änderung der Auftrittshäufigkeit der Gleitfunken, alleine durch die Bewertung der Verbrennungsaussetzerhäufigkeit und/oder der Laufruhe der Verbrennungskraftmaschine, der Vorgang beendet werden und die neuen Parameter im Motorsteuergerät zylinderselektiv festgeschrieben werden.

Fällt die Auftrittshäufigkeit der Gleitfunken im definierten Kennfeldbereich oder Betriebszustand unter ein definiertes Niveau, wird das von der Zündspule an das Motorsteuergerät übermittelte Signal derart verändert, dass es einen Normalbetriebszustand ohne übermäßiges Auftreten von Gleitfunken charakterisiert. Dieses den Normalbetriebszustand charakterisierende Signal wird dann an das Motorsteuergerät übermittelt. Durch diese Information wird dem Motorsteuergerät der wenigstens eine, inkrementell verstellte Parameter festgeschrieben und für diesen Zylinder abgespeichert. Die abgespeicherte Parameteränderung kann beispielsweise additiv, prozentual oder faktoriell in dem auffälligen Lastbereich, Betriebszustand oder Laststand erfolgen bzw. angewendet werden und auf andere Lastzustände, Betriebsarten, Kennfeldbereiche oder Zylinder übertragen werden.

Vorzugsweise wird im Motorsteuergerät weiterhin die Auftrittshäufigkeit von Verbrennungsaussetzern bzw. Gleitfunken dokumentiert bzw. in einem Fehlerspeicher abgelegt. Nimmt die Aussetzerhäufigkeit nach Änderung und Festschreiben der Parameter nicht oder nicht signifikant ab, so kann vorteilhafterweise das beschriebene Verfahren wiederholt werden, bis die Auftrittshäufigkeit der Gleitfunken unter ein definiertes, zweites niedrigeres Niveau sinkt.

Die geschilderte, zylinderselektive und iterative Änderung der genannten Parameter kann dabei mehrfach erfolgen. Ferner ist vorzugsweise vorgesehen, dass bei einem Wechsel der jeweiligen Injektoren, der jeweiligen Zündkerzen und/oder Teilen der Zündeinrichtung die vorgenommenen Änderungen der Parameter rückgängig gemacht werden, um mit neu verbauten Teilen einhergehenden, neuen Randbedingungen für die Verbrennung die Gleitfunkenanalyse bzw. die Gleitfunkenerkennung von vorne zu beginnen.

## Patentansprüche

1. Verfahren zum Betreiben einer Verbrennungskraftmaschine, mit den Schritten:
- Erzeugen mehrere Funken zum Zünden eines Kraftstoff-Luft-Gemisches in wenigstens einem Brennraum mittels einer Zündeinrichtung der Verbrennungskraftmaschine,
- Ermitteln wenigstens einer Brenndauer (t_{F1}) zumindest eines der Funken,
- Erfassen einer Abweichung eines Ist-Betriebs von einem Soll-Betrieb der Verbrennungskraftmaschine zumindest in Abhängigkeit von der wenigstens einen Brenndauer (t_{F1}), und
- Kompensation der Abweichung durch Durchführen wenigstens einer Maßnahme, welche eine Verbrennung des Kraftstoff-Luft-Gemisches in dem wenigstens einen Brennraum beeinflusst,
**gekennzeichnet durch** die Schritte:
- Ermitteln der wenigstens einen Brenndauer (t_{F1}) des zeitlich ersten der Funken,
- Zuordnen des ersten Funkens zu einer ersten Funkenart oder einer zweiten Funkenart in Abhängigkeit von der wenigstens einen ermittelten Brenndauer (t_{F1}), und
- Durchführen der wenigstens einen Maßnahme, wenn wenigstens ein eine Häufigkeit einer der Funkenarten charakterisierender Wert (30) einen Schwellenwert überschreitet.

2. Verfahren nach Anspruch 1,
**dadurch gekennzeichnet, dass**
die wenigstens eine Brenndauer (t_{F1}) mittels der Zündeinrichtung ermittelt wird.

3. Verfahren nach Anspruch 2,
**dadurch gekennzeichnet, dass**
ein die ermittelte Brenndauer (t_{F1}) charakterisierendes Signal (i_{bidi}) und/oder ein die Häufigkeit der einen Funkenart charakterisierendes Signal (i_{bidi}) von der Zündeinrichtung bereitgestellt und an eine von der Zündeinrichtung unterschiedliche Recheneinrichtung der Verbrennungskraftmaschine übermittelt wird.

4. Verfahren nach einem der vorhergehenden Ansprüche,
**dadurch gekennzeichnet, dass**
der Schwellenwert variabel eingestellt wird.

5. Verfahren nach einem der vorhergehenden Ansprüche,
**dadurch gekennzeichnet, dass**
die wenigstens Brenndauer (t_{F1}) des ersten Funkens anhand eines zeitlichen Verlaufs (13) eines Sekundärstroms (i_{Seku}) der Zündeinrichtung ermittelt wird.

6. Verfahren nach einem der vorhergehenden Ansprüche,
**dadurch gekennzeichnet, dass**
die wenigstens Brenndauer (t_{F1}) des ersten Funkens anhand eines zeitlichen Verlaufs (11) eines Primärstroms (i_{Prim}) der Zündeinrichtung ermittelt wird.

7. Verfahren nach einem der vorhergehenden Ansprüche,
**dadurch gekennzeichnet, dass**
als die Maßnahme eine Menge des in den Brennraum eingebrachten Kraftstoffes des Kraftstoff-Luft-Gemisches verändert wird.

8. Verfahren nach einem der vorhergehenden Ansprüche,
**dadurch gekennzeichnet, dass**
als die Maßnahme einen Einspritzzeitpunkt und/oder Zündzeitpunkt verändert wird.

9. Verfahren nach Anspruch 8,
**dadurch gekennzeichnet, dass**
als die Maßnahme der Einspritzzeitpunkt relativ zum Zündzeitpunkt verändert wird.

10. Verbrennungskraftmaschine, mit wenigstens einem Brennraum, mit einer Zündeinrichtung zum Erzeugen mehrere Funken zum Zünden eines Kraftstoff-Luft-Gemisches in dem Brennraum und mit einer Recheneinrichtung, wobei die Recheneinrichtung dazu ausgelegt ist:
- wenigstens eine Brenndauer (t_{F1}) zumindest eines der Funken zu ermitteln,
- eine Abweichung eines Ist-Betriebs von einem Soll-Betrieb der Verbrennungskraftmaschine zumindest in Abhängigkeit von der wenigstens einen Brenndauer (t_{F1}) zu ermitteln, und
- die Abweichung durch Durchführen wenigstens einer Maßnahme, welche eine Verbrennung des Kraftstoff-Luft-Gemisches in dem wenigstens einen Brennraum beeinflusst, zu kompensieren,
**dadurch gekennzeichnet, dass**
die Recheneinrichtung dazu ausgelegt ist:
- die wenigstens eine Brenndauer (t_{F1}) des zeitlich ersten der Funken zu ermitteln,
- den ersten Funken einer ersten Funkenart oder einer zweiten Funkenart in Abhängigkeit von der wenigstens einen ermittelten Brenndauer (t_{F1}) zuzuordnen, und
- die wenigstens eine Maßnahme durchzuführen, wenn wenigstens ein eine Häufigkeit einer der Funkenarten charakterisierender Wert (30) einen Schwellenwert überschreitet.

## Claims

1. Method for operating an internal combustion engine, having the steps:
- generate a plurality of sparks to ignite a fuel-air mixture in at least one combustion chamber by means of an ignition device of the internal combustion engine,
- determine at least one burning time (t_{F1}) of at least one of the sparks,
- detect a deviation of an actual operation from a target operation of the internal combustion engine at least in dependence upon the at least one burning time (t_{F1}), and
- compensate the deviation by performing at least one measure which influences a combustion of the fuel-air mixture in the at least one combustion chamber,
**characterised by** the steps:
- determine the at least one burning time (t_{F1}) of the first, in temporal terms, of the sparks,
- assign the first spark to a first spark type or a second spark type in dependence upon the at least one determined burning time (t_{F1}), and
- perform the at least one measure if at least one value (30) characterising a frequency of one of the spark types exceeds a threshold value.

2. Method according to claim 1,
**characterised in that**
the at least one burning time (t_{F1}) is determined by means of the ignition device.

3. Method according to claim 2,
**characterised in that**
a signal (i_{bidi}) characterising the determined burning time (t_{F1}) and / or a signal (i_{bidi}) characterising the frequency of the one spark type is / are provided by the ignition device and transmitted to a computing device, separate from the ignition device, of the internal combustion engine.

4. Method according to one of the preceding claims,
**characterised in that**
the threshold value is variably set.

5. Method according to one of the preceding claims,
**characterised in that**
the at least one burning time (t_{F1}) of the first spark is determined by reference to a temporal progression (13) of a secondary flow (i_{Seku}) of the ignition device.

6. Method according to one of the preceding claims,
**characterised in that**
the at least one burning time (t_{F1}) of the first spark is determined by reference to a temporal progression (11) of a primary flow (i_{Prim}) of the ignition device.

7. Method according to one of the preceding claims,
**characterised in that**
the measure is to change an amount of the fuel, brought into the combustion chamber, of the fuel-air mixture.

8. Method according to one of the preceding claims,
**characterised in that**
the measure is to change an injection time point and / or ignition time point.

9. Method according to claim 8,
**characterised in that**
the measure is to change the injection time point relative to the ignition time point.

10. Internal combustion engine, having at least one combustion chamber, having an ignition device to generate a plurality of sparks to ignite a fuel-air mixture in the combustion chamber, and having a computing device, wherein the computing device is designed:
- to determine at least one burning time (t_{F1}) of at least one of the sparks,
- to determine a deviation of an actual operation from a target operation of the internal combustion engine at least in dependence upon the at least one burning time (t_{F1}), and
- to compensate the deviation by performing at least one measure which influences a combustion of the fuel-air mixture in the at least one combustion chamber,
**characterised in that**
the computing device is designed:
- to determine the at least one burning time (t_{F1}) of the first, in temporal terms, of the sparks,
- to assign the first spark to a first spark type or a second spark type in dependence upon the at least one determined burning time (t_{F1}), and
- to perform the at least one measure if at least one value (30) characterising a frequency of one of the spark types exceeds a threshold value.

## Revendications

1. Procédé de fonctionnement d'un moteur à combustion interne, comprenant les étapes consistant à :
- produire plusieurs étincelles destinées à allumer un mélange d'air et de carburant dans au moins une chambre de combustion au moyen d'un dispositif d'allumage du moteur à combustion interne,
- déterminer au moins une durée de combustion (t_{F1}) d'au moins l'une des étincelles,
- détecter un écart entre un fonctionnement réel et un fonctionnement théorique du moteur à combustion interne au moins en fonction de ladite durée de combustion (t_{F1}), et
- compenser l'écart par la mise en oeuvre d'au moins une mesure qui influence une combustion du mélange d'air et de carburant dans ladite chambre de combustion,
**caractérisé par** les étapes qui consistent à :
- déterminer ladite durée de combustion (t_{F1}) de la première des étincelles,
- associer la première étincelle à un premier type d'étincelle ou à un second type d'étincelle en fonction de ladite durée de combustion (t_{F1}) déterminée, et
- exécuter ladite mesure, lorsqu'au moins une valeur (30) caractérisant une fréquence d'un des types d'étincelle dépasse une valeur seuil.

2. Procédé selon la revendication 1, **caractérisé en ce que** ladite durée de combustion (t_{F1}) est déterminée au moyen d'un dispositif d'allumage.

3. Procédé selon la revendication 2, **caractérisé en ce qu'**un signal (i_{bldi}) caractérisant la durée de combustion (t_{F1}) déterminée et/ou un signal (i_{bidl}) caractérisant la fréquence d'un type d'étincelle est fourni par le dispositif d'allumage et transmis à un dispositif de calcul du moteur à combustion interne différent du dispositif d'allumage.

4. Procédé selon l'une quelconque des revendications précédentes, **caractérisé en ce que** la valeur seuil est réglée de manière variable.

5. Procédé selon l'une quelconque des revendications précédentes, **caractérisé en ce que** ladite durée de combustion (t_{F1}) de la première étincelle est déterminée au moyen d'une variation temporelle (13) d'un courant secondaire (iₛₑₖᵤ) du dispositif d'allumage.

6. Procédé selon l'une quelconque des revendications précédentes, **caractérisé en ce que** ladite durée de combustion (t_{F1}) de la première étincelle est déterminée au moyen d'une variation temporelle (11) d'un courant primaire (i_{Prim}) du dispositif d'allumage.

7. Procédé selon l'une quelconque des revendications précédentes, **caractérisé en ce qu'**en tant que mesure, on modifie une quantité du carburant du mélange d'air et de carburant, amenée dans la chambre de combustion.

8. Procédé selon l'une quelconque des revendications précédentes, **caractérisé en ce qu'**en tant que mesure, on modifie un point d'injection et/ou un point d'allumage.

9. Procédé selon la revendication 8, **caractérisé en ce qu'**en tant que mesure, on modifie le point d'injection par rapport au point d'allumage.

10. Moteur à combustion interne, comprenant au moins une chambre de combustion, et un dispositif d'allumage destiné à produire plusieurs étincelles destinées à allumer un mélange d'air et de carburant dans la chambre de combustion et un dispositif de calcul, le dispositif de calcul étant conçu pour :
- déterminer une durée de combustion (t_{F1}) d'au moins une des étincelles,
- déterminer un écart entre un fonctionnement réel et un fonctionnement théorique du moteur à combustion interne au moins en fonction de ladite durée de combustion (t_{F1}), et
- compenser l'écart par la mise en oeuvre d'au moins une mesure qui influence une combustion du mélange d'air et de carburant dans ladite chambre de combustion,
**caractérisé en ce que** le dispositif de calcul est conçu pour :
- déterminer ladite durée de combustion (t_{F1}) de la première des étincelles,
- associer les premières étincelles à un premier type d'étincelle ou à un second type d'étincelle en fonction de ladite durée de combustion déterminée (t_{F1}), et
- mettre en oeuvre ladite mesure, lorsqu'au moins une valeur (30) caractérisant une fréquence d'un des types d'étincelles dépasse une valeur seuil.
